# FASCICULE DE BREVET EUROPEEN

(11) **EP 0 719 347 B1**
(45) Date de publication et mention de la délivrance du brevet: **23.04.1997**
(21) Numéro de dépôt: 94926871.8
(22) Date de dépôt: 24.08.1994
(51) Int. Cl.: C22B 3/08

(54) **PROCEDE D'EXTRACTION DE ZINC DE CONCENTRES SULFURES**
VERFAHREN ZUR EXTRAKTION VON ZINK AUS SCHWEFELHALTIGEN KONZENTRATEN
METHOD FOR REMOVING ZINC FROM SULPHURED CONCENTRATES

(30) Priorité: 27.08.1993 BE 9300882; 23.12.1993 BE 9301451
(43) Date de publication de la demande: 03.07.1996
(73) Titulaire: n.v. UNION MINIERE s.a., B-1200 Bruxelles (BE)
(72) Inventeur: VAN PUT, John, W., B-2018 Antwerpen (BE); TERWINGHE, François, M., I., G., B-2400 Mol (BE); DE NYS, Thierry, S., A., B-2400 Mol (BE)
(74) Mandataire: Saelemaekers, Juul
(86) Numéro de dépôt international: EP9402794
(87) Numéro de publication internationale: WO9506140

(56) Documents cités:
- EP-A- 0 071 684
- EP-A- 0 166 710
- EP-A- 0 428 194
- EP-A- 0 451 456
- WO-A-91/09146
- WO-A-93/15236
- BE-A- 724 214
- US-A- 3 976 743
- US-A- 4 004 991
- US-A- 4 107 265
- US-A- 4 510 028
- DATABASE WPI Derwent Publications Ltd., London, GB; AN 93-187389 & SU,A,1 740 464 (SIBE METAL INST)

## Description

La présente invention se rapporte à un procédé d'extraction de zinc de concentrés sulfurés de zinc comportant les opérations suivantes :
(a) le grillage d'une partie des concentrés de manière à produire de la calcine,
(b) la lixiviation neutre de calcine, produite dans l'opération (a), avec une solution d'acide sulfurique de retour d'électrolyse de manière à produire une solution de lixiviation riche en zinc et en substance exempte de fer, qui est séparée, et un résidu de ferrite de zinc, qui est séparé,
(c) la lixiviation d'une autre partie des concentrés et d'au moins une partie du résidu de ferrite de zinc, produit dans l'opération (b), avec une solution d'acide sulfurique de retour d'électrolyse à 60-95°C en des conditions atmosphériques et en présence d'oxygène finement dispersé de manière à produire une solution de lixiviation nche en zinc et en fer, qui est séparée, et un résidu de lixiviation pauvre en zinc, qui est séparé, les quantités de concentrés et de ferrite de zinc mises en oeuvre dans cette opération (c) étant telles que le rapport molaire entre le fer contenu dans le ferrite et le soufre réactif contenu dans les concentrés soit d'au moins environ 0,2,
(d) le conditionnement, préparatoire à l'opération suivante, de la solution de lixiviation nche en zinc et en fer, produite dans l'opération (c),
(e) la précipitation de la majeure partie du fer contenu dans la solution, conditionnée dans l'opération (d), de manière à produire une solution riche en zinc et pauvre en fer et un précipité ferrifére, qui est séparé, et
(f) l'introduction de la solution nche en zinc et pauvre en fer dans la lixiviation neutre en (b).
Il faut entendre ici sous
- "concentré sulfuré de zinc" : un concentré contenant à l'état de sulfures principalement du zinc et du fer et en moindres proportions du cuivre, de l'argent et/ou du plomb ;
- "en des conditions atmosphériques" : en des conditions qui ne requièrent pas la mise en oeuvre d'autoclaves, c'est-à-dire sous une pression égale à ou s'écartant moins de 20kPa de la pression atmosphérique ; et
- "soufre réactif" : le soufre présent à l'état de sulfure dans les concentrés sulfurés de zinc et dans le résidu de lixiviation riche en zinc (expression utilisée plus loin) et qui peut être oxydé par le sulfate ferrique selon la réaction :

   Fe₂(SO₄)₃ + MeS = MeSO₄ + 2FeSO₄ + S° (I)

   dans laquelle Me représente Zn, Fe, Cu, Pb ou Ag.
   (le soufre réactif est en général constitué par la totalité du soufre présent à l'état de sulfure moins le soufre de pyrite).

Par le procédé de l'invention on obtient donc une solution de lixiviation riche en zinc et en substance exempte de fer, un résidu de lixiviation pauvre en zinc et un précipité ferrifère.
Cette solution de lixiviation peut être épurée en ensuite électrolysée pour en extraire le zinc.
Le résidu de lixiviation pauvre en zinc, qui contient du soufre, des sulfates de plomb, des composés d'argent, des sulfures non-dissous (pyrites) et du stérile, peut être soumis à un traitement approprié pour en extraire le soufre et les métaux de valeur. Le précipité ferrifère peut être entreposé ou, lorsqu'il est suffisamment pur, il peut être utilisé comme pigment ou comme source de fer dans la sidérurgie.

Un procédé tel que défini ci-dessus est décrit dans le document EP-A-0451456. Dans ce procédé connu on lixivie dans l'opération (b) la totalité de la calcine, produite dans l'opération (a), et on lixivie dans l'opération (c) la totalité du ferrite, produit dans l'opération (b), en utilisant un rapport concentré : ferrite tel qu'environ 15 à 20% du fer trivalent, requis pour l'oxydation selon la réaction (I) du soufre réactif présent dans le concentré, proviennent de la lixiviation du ferrite suivant la réaction

ZnO.Fe₂O₃ + 4H₂SO₄ = Fe₂(SO₄)₃ + ZnSO₄ + 4H₂O (II)

Le reste du fer trivalent, requis pour l'oxydation du soufre réactif, est obtenu par la réaction

2 FeSO₄ + H₂SO₄ + 0,5O₂ = Fe₂(SO₄)₃ + H₂O (III)

On se propose de travailler en (c) de manière à ce que la solution de lixiviation riche en zinc et en fer ait une teneur en acide sulfurique de 10-25g/l et une teneur en Fe³⁺ de moins de 10g/l, ce qui est apparemment irréalisable en une seule étape de lixiviation. C'est pourquoi on lixivie en (c) en deux étapes.
Dans la première étape on traite le ferrite de zinc et un résidu de lixiviation riche en zinc, produite dans le seconde étape, avec la solution d'acide de retour l'électrolyse
de manière à produire une solution de lixiviation primaire à 50-90g/l de H₂SO₄ et le résidu de lixiviation pauvre en zinc, qui sont séparés. On n'utilise pas d'oxygène dans cette première étape de lixiviation, ceci pour pouvoir mettre en oeuvre dans cette étape des types de réacteurs plus simples que dans la seconde étape. On ne fait donc pas intervenir la réaction (III) dans la première étape.
Dans la seconde étape on traite les concentrés avec ladite solution de lixiviation primaire en présence d'oxygène finement dispersé de manière à produire par les réactions (I) et (III) une solution de lixiviation riche en zinc et en fer et un résidu de lixiviation riche en zinc. A la fin de cette seconde étape on effectue l'opération (d) en ajoutant à la pulpe de lixiviation une faible quantité de concentré frais de manière à transformer le sulfate ferrique en sulfate ferreux par la réaction (I) ; l'opération (d) est donc intégrée dans l'opération (c) et l'on obtient comme résultat de la secondé étape de lixiviation le résidu de lixiviation riche en zinc, qui est séparé et recyclé dans la première étape, et une solution de lixiviation riche en zinc et en fer, qui est déjà conditionnée.
On effectue l'opération (e) en ajoutant à la solution conditionnée encore du concentré et en précipitant alors le fer sous la forme d'hématite par oxydation dans un autoclave.
On obtient ainsi d'une part ladite solution riche en zinc et pauvre en fer et d'autre part un précipité d'hématite contenant une faible quantité de soufre élémentaire et de sulfures. Ce soufre et ces sulfures sont séparés ultérieurement de l'hématite par flottation. La raison pour laquelle du concentré est mis en oeuvre dans l'opération (e) n'est pas donnée. Une explication possible pourrait être que l'acidité de la solution conditionnée est trop élevée pour permettre une précipitation convenable du fer et que l'on ajoute de ce fait du concentré comme agent de neutralisation (réactions (I) et (II)).

Ce procédé connu requiert donc une lixiviation en deux étapes et puisqu'on travaille avec un rapport concentrés : ferrite tel qu'environ 15 à 20% du fer trivalent, requis pour l'oxydation selon la réaction (I) du soufre réactif présent dans le concentré, proviennent de la lixiviation du ferrite suivant la réaction (II) et que l'on n'utilise pas d'oxygène dans la première étape de lixiviation, on est obligé d'oxyder environ 80 à 85% du soufre réactif dans la seconde étape de lixiviation par du fer trivalent obtenu par la réaction (III), lorsqu'on vise un rendement de lixiviation du zinc de près de 100%.

Or, la demanderesse a trouvé que dans ces conditions la seconde étape de lixiviation se déroule très lentement, ce qui constitue évidemment un grave inconvénient. Un autre inconvénient de ce procédé connu réside dans le fait que l'opération (c) n'est pas facile à contrôler, parce que le rendement de lixiviation est déterminé uniquement par le rapport entre le soufre réactif et le ferrite de zinc introduits dans la première étape de lixiviation et que le système réagit très lentement sur des corrections apportées à ce rapport.
Par ailleurs, la mise en oeuvre de ce procédé connu dans les usines de zinc hydrométallurgiques existantes entraînerait presque toujours un investissement considérable pour l'achat des autoclaves requis pour l'opération (e). En effet, à la connaissance de la demanderesse, il n'y a que deux usines au monde qui font de l'hématite et qui sont donc déjà équipées de tels autoclaves ; toutes les autres font de la jarosite ou de la goethite dans des conditions atmosphériques et elle ne sont donc pas dotées de tels autoclaves.
De plus, comme dans ce procédé connu la totalité du ferrite, produit dans l'opération (b), est lixivié en (c) en utilisant un rapport concentré : ferrite tel qu'environ 15 à 20% du fer trivalent, requis pour l'oxydation du soufre réactif, proviennent de la lixiviation du ferrite, l'implantation de ce procédé dans une usine existante, dont on maintiendrait la capacité de grillage en toute logique au niveau existant, devrait mener en une fois à environ un redoublement de la capacité de l'usine. Or, une augmentation de capacité aussi substantielle en un temps d'une usine existante, qui ira inévitablement de pair avec des investissements substantiels, ne sera pas souvent opportune. Le procédé manque donc d'une certaine souplesse.
Du reste, on produit par ce procédé connu une hématite souillée de soufre et de sulfures.

Le but de la présente invention est de procurer un procédé tel que défini ci-dessus, qui évite les inconvénients du procédé connu.

A cet effet, selon l'invention
(1) on lixivie dans l'opération (b) seulement une partie de la calcine, produite dans l'opération (a),
(2) on effectue la lixiviation en (c)
   - soit en une seule étape, dans lequel cas on travaille de manière à ce que la solution de lixiviation riche en zinc et en fer ait une teneur en acide sulfurique de 45-75 g/l, de préférence de 55-65 g/l, et une teneur en Fe³⁺ de 1-10 g/l, de préférence de 2-5 g/l,
      soit en deux étapes, dans lequel cas on travaille de manière à ce que la solution de lixiviation riche en zinc et en fer ait une teneur en acide sulfurique de 10-35 g/l, de préférence de 10-25 g/l et une teneur en Fe³⁺ de 0,1-2 g/l, de préférence de 0,5-1 g/l, la première étape consistant à traiter le ferrite de zinc et un résidu de lixiviation riche en zinc, produit dans la seconde étape, avec la solution d'acide sulfurique de retour d'électrolyse en présence d'oxygène finement dispersé de manière à produire une solution de lixiviation primaire et ledit résidu de lixiviation pauvre en zinc, qui sont séparés, et la seconde étape consistant à traiter les concentrés avec ladite solution de lixiviation primaire en présence d'oxygène finement dispersé de manière à produire ladite solution de lixiviation riche en zinc et en fer et ledit résidu de lixiviation riche en zinc, qui sont séparés, cette seconde étape étant effectuée en des conditions telles que moins de 60% et de préférence moins de 50% du soufre réactif y soient oxydés et que le résidu de lixiviation riche en zinc y produit ait une teneur en soufre réactif qui est sensiblement supérieure à celle qui peut être oxydée dans la première étape par le fer présent dans le ferrite,
(3) on effectue l'opération (d) en traitant la solution de lixiviation riche en zinc et en fer avec encore une autre partie des concentrés de manière à ramener sa teneur en Fe³⁺ en-dessous de 5 g/l et de préférence à 1-3 g/l, ce traitement réducteur pouvant être omis lorsque la solution de lixiviation riche en zinc et en fer a déjà une teneur en Fe³⁺ de moins de 5 g/l, et en traitant la solution à faible teneur en Fe³⁺ avec une autre partie de la calcine, produite dans l'opération (a), de manière à ramener la teneur en H₂SO₄ libre de cette solution en dessous de 10 g/l et de préférence à 3-5 g/l, ce traitement de neutralisation produisant d'une part un résidu de ferrite de zinc, qui est séparée et ensuite traité de la même façon que le ferrite produit dans l'opération (b), et d'autre part une solution conditionnée,
(4) on effectue l'opération (e) en précipitant le fer d'une manière connue en soi sous la forme de goethite, hématite, jarosite ou autre composé dont la filtrabilité est convenable, ceci en l'absence de concentré sulfuré de zinc, et
(5) on lixivie dans l'opération (c)
   - soit la totalité du résidu de ferrite produit dans les opérations (b) et (d),
   - soit une partie seulement de ce ferrite, dans lequel cas on traite le reste de ce ferrite séparément d'une manière connue en soi par lixiviation acide à chaud, ce traitement produisant une autre solution de lixiviation riche en zinc et en fer, et on fait subir à cette solution les opérations (d), (e) et (f) ensemble avec la solution de lixiviation riche en zinc et en fer produite dans l'opération (c).

En effet, en lixiviant dans l'opération (b) seulement une partie de la calcine produite dans l'opération (a), on peut utiliser une autre partie de cette calcine dans l'opération (d).
En effectuant l'opération (c) comme défini en (2), on raccourcit sensiblement la durée de lixiviation, que l'on travaille en une seule ou en deux étapes, comme il sera démontré plus loin, et on peut facilement contrôler cette opération (c), étant donné que le rendement de lixiviation est déterminé maintenant par la quantité d'oxygène mise en oeuvre et que le système réagit promptement sur des corrections apportées à ce paramètre.
En effectuant l'opération (d) comme défini en (3), on obtient une solution conditionnée, dans laquelle on peut précipiter le fer par n'importe quelle technique classique d'oxydation et d'hydrolyse, ceci avec un minimum de neutralisant, lorsqu'on précipite de la goethite ou de la jarosite, et sans qu'il ne soit nécessaire d'ajouter du concentré sulfuré de zinc, lorsqu'on précipite de l'hématite.
En effectuant l'opération (e) comme défini en (4), on peut implanter le procédé de l'invention dans n'importe quelle usine de zinc hydrométallurgique existante, sans que cela n'entraîne forcément un investissement important.
Par sa caractéristique définie en (5), le procédé de l'invention permet d'augmenter progressivement la capacité d'une usine existante, ceci selon les besoins et avec un échelonnement avantageux des frais d'investissement.

Il convient de signaler ici ce qui suit .
Les documents US-A-3976743, US-A-4107265 et BE-A-724214 décrivent des procédés de traitement de ferrite de zinc, qui font appel aux réactions (I) et (II), mais pas à la réaction (III). Ces procédés connus ne permettent pas d'augmenter la capacité des usines de zinc existantes produisant du ferrite, car toutes ces usines font déjà usage d'une manière ou d'une autre des réactions (I) et (II).

Le document WO-A-91/09146 décrit un procédé de traitement de ferrite de zinc, comportant successivement la lixiviation du ferrite avec de l'acide de retour d'électrolyse (réaction II), la neutralisation partielle de l'acide résiduaire par addition de concentré de ZnS en présence d'oxygène (réactions I et III), la réduction du fer trivalent par addition de concentré (réaction I), la flottation de la pulpe de manière à en séparer du soufre élémentaire et du concentré qui n'a pas réagi, le traitement du résidu de flottation avec du SO₂ pour lixivier davantage le fer, le zinc et les impuretés, le traitement de la pulpe qui en résulte avec du soufre élémentaire pour précipiter le cuivre, la flottation de la pulpe de manière à en séparer un concentré de sulfure de cuivre, la filtration de la pulpe et la précipitation du fer dans la solution qui en résulte. Ce procédé connu se distingue du procédé de l'invention, non seulement par sa complexité, mais également par le fait que la réaction (II) est mise en oeuvre avant les réactions (I) et (III), ce qui prolonge la durée de lixiviation, comme la demanderesse a constaté.
Les documents US-A-4510028 et EP-A-0071684 décrivent un procédé de traitement de ferrite de zinc par lixiviation acide en une ou deux étapes, en présence de concentré et avec de l'oxygène sous pression à 135-175°C (réactions I, II et III). Le rapport ferrite : concentré doit être tel que le zinc contenu dans le ferrite s'élève à 5-40% et de préférence à 5-20% de la totalité du zinc contenu dans le ferrite et le concentré. Ce procédé connu requiert donc, au contraire du procédé de l'invention, des autoclaves pour la lixiviation du ferrite et du concentré. De plus, puisque ce procédé connu donne les meilleurs résultats avec un faible rapport femte : concentré, son implantation dans une usine existante produisant du ferrite, ferait en une fois s'accroître énormément la capacité de cette usine, ce qui n'est pas souvent opportun. Le document EP-A-0166710 décrit un procédé tel que défini au début de la présente demande, si ce n'est que le rapport concentrés : ferrite utilisé dans l'opération (c) n'est pas spécifié, que l'opération (c) est effectuée partiellement sous pression et que l'opération (d) est omise. Dans ce procédé connu on lixivie dans l'opération (b) une partie de la calcine, produite dans l'opération (a), et on lixivie dans l'opération (c) la totalité du ferrite, produit dans l'opération (b). L'opération (c) est effectuée en trois étapes. Dans la première étape on traite le ferrite et un résidu de lixiviation relativement pauvre en zinc, produite dans la deuxième étape, avec de l'acide de retour de l'électrolyse en présence d'oxygène et dans des conditions atmosphériques de manière à produire une solution de lixiviation primaire et un résidu de lixiviation pauvre en zinc, qui sont séparés. Dans la deuxième étape on traite un résidu de lixiviation riche en zinc, produite dans la première étape, et éventuellement du concentré avec ladite solution de lixiviation primaire en présence d'oxygène et à 120-160°C, c'est-à-dire dans un autoclave ou appareil équivalent, de manière à produire une solution de lixiviation secondaire et ledit résidu relativement pauvre en zinc, qui sont séparés. Dans la troisième étape on traite du concentré avec ladite solution de lixiviation secondaire en présence d'oxygène et en des conditions atmosphériques de manière à produire une solution de lixiviation riche en zinc et en fer et ledit résidu de lixiviation riche en zinc, qui sont séparés. On travaille de manière à ce que la solution de lixiviation riche en zinc et en fer ait une teneur en acide d'environ 4 à 8 g/l. Cette solution est directement soumise à l'opération (e), qui consiste à précipiter le fer sous la forme de goethite en utilisant comme neutralisant l'autre partie de la calcine produite en (a). Ce procédé connu se distingue du procédé de l'invention, non seulement par l'absence de l'opération (d) et la complexité de l'opération (c) dont la mise en oeuvre requiert en outre un autoclave ou appareil équivalent, mais également par le fait que l'on épuise presque la totalité de l'acide dans l'opération (c) par les réactions (I) et (III). Or, il a été trouvé qu'on prolonge ainsi excessivement la durée globale de l'opération (c). De plus, comme dans ce procédé connu on utilise l'autre partie de la calcine produite en (a) comme neutralisant en (e), on produit forcément de la goethite contenant une quantité substantielle de ferrite de zinc, ce qui peut être évité dans le procédé de l'invention.
Le document US-A-4004991 décrit un procédé d'extraction de zinc de concentrés sulfurés, suivant lequel les concentrés sont lixiviés en deux étapes à contre-courant avec de l'acide de retour d'électrolyse en présence d'oxygène à 135-175°C, c'est-à-dire en autoclave. Comme ce procédé connu ne comporte pas les opérations (a) et (b), le seul point commun entre ce procédé et la procédé de l'invention réside dans le fait qu'on effectue une lixiviation en 2 étapes avec de l'acide de retour d'électrolyse.

Lorsqu'on fait abstraction de l'opération (e), le procédé de l'invention prévoit quatre voies différentes, qui seront appelées ci-après "variantes":
- première variante : effectuer l'opération (c) en une seule étape avec une partie seulement du résidu de ferrite produit dans les opérations (b) et (d)
- deuxième variante : effectuer l'opération (c) en une seule étape avec la totalité du résidu de ferrite produit dans les opérations (b) et (d)
- troisième variante : effectuer l'opération (c) en deux étapes avec une partie seulement du ferrite
- quatrième variante : effectuer l'opération (c) en deux étapes avec la totalité du ferrite.

Lorsqu'on travaille dans des conditions comparables (le même concentré et la même quantité de concentré utilisés en (a), le même rapport molaire entre le fer du ferrite et le soufre réactif du concentré utilisé en (c) et, lorsqu'on utilise la première et la troisième variantes, la même fraction de ferrite mise en oeuvre en (c)), la production de zinc sera la plus faible dans la première variante et la plus forte dans la quatrième. Dans la première et la troisième variantes on peut faire varier la production de zinc avec la fraction de ferrite mise en oeuvre en (c). Dans chacune des quatre variantes on peut encore faire varier la production de zinc en jouant sur ledit rapport molaire. Comme il a déjà été mentionné plus haut, le procédé classique d'extraction de zinc, utilisé dans les usines existantes qui font du ferrite, fait déjà appel aux réactions (I) et (II). L'accroissement de production, que l'on obtient en substituant dans ces usines le procédé de l'invention à ce procédé classique, sera donc essentiellement lié à la quantité de zinc mise en solution en (c) par les réactions (I) et (III). On utilisera donc la première variante, lorsqu'on veut réaliser une augmentation de capacité relativement faible (par exemple de 5 à 10%) ou lorsqu'on veut réaliser consécutivement plusieurs augmentations de faible envergure. On utilisera la deuxième variante pour augmenter substantiellement la capacité de l'usine, et la quatrième, lorsqu'on veut davantage augmenter la capacité. Normalement on n'utilisera la troisième variante que lorsqu'on veut pour une raison quelconque continuer à traiter une partie du ferrite par la voie classique et en même temps profiter au maximum de la fraction de ferrite mise en oeuvre en (c).

Le rapport molaire entre le fer contenu dans le ferrite de zinc et soufre réactif contenu dans le concentré est d'au moins environ 0,2 et de préférence d'au moins 0,3 pour que la vitesse de lixiviation en (c) ne devienne pas trop faible. Il est évident que ce rapport doit être inférieur à 2 pour qu'on puisse encore faire appel à la réaction (III). Dans la quatrième variante ce rapport sera avantageusement égal ou inférieur à 0,6, de préférence égal ou inférieur à 0,4, pour que la production de zinc soit maximale. Ce rapport de < 0,6 convient d'ailleurs également pour les autres variantes.

En ce qui concerne les conditions de la lixiviation en une étape (première et deuxième variantes) :
- la teneur en H₂SO₄ de la solution de lixiviation riche en zinc et en fer est d'au moins 45 g/l et de préférence d'au moins 55 g/l ; autrement, on risque de précipiter des jarosites de plomb et d'argent, qui non seulement gênent la lixiviation elle-même mais qui peuvent en outre nuire ultérieurement à la récupération des métaux de valeur à partir du résidu en zinc ; par ailleurs, une teneur en acide trop faible complique également la séparation du résidu pauvre en zinc de la solution de lixiviation.
- la teneur en H₂SO₄ de la solution de lixiviation n'est pas supérieure à 75 g/l et de préférence pas supérieure à 65 g/l ; sinon, il faut utiliser trop de calcine en (d)
- la teneur en Fe³⁺ de la solution de lixiviation est de 1-10 g/l, de préférence de 2-5 g/l, parce que dans ces conditions la vitesse et le rendement de lixiviation sont optimaux.
Il est particulièrement utile de veiller à ce que la concentration en fer trivalent ne descende pas en dessous d'environ 0,1 g/l, de préférence pas en-dessous de 0,2 g/l, au cours de la phase initiale de la lixiviation. Si on descend en dessous d'environ 0,1 g/l de Fe³⁺, on risque non seulement d'avoir des problèmes de corrosion, notamment avec les aciers couramment utilisés pour la construction d'appareils de lixiviation, mais également de former du H₂S et de voir disparaître le cuivre de la solution, cuivre qui catalyse la réaction III. Pour éviter ces problèmes il faut que le potentiel de la pulpe soit d'au moins 530 mV (NHE) et de préférence d'au moins 560 mV. Par ailleurs, il est également avantageux de veiller à ce que le potentiel de la pulpe ne monte pas au dessus de 640 mV dans ladite phase initiale, parce que le ferrite se dissout moins vite au-dessus de 610 mV.
Il importe donc de contrôler rigoureusement, notamment par des mesures de potentiel, la concentration en fer trivalent de la solution dans les diverses phases de la lixiviation et d'ajuster au besoin cette concentration en modifiant le débit d'oxygène et/ou la température, une réduction de la température rendant le soufre réactif moins réducteur et donc moins avide de fer trivalent.

En ce qui conceme les conditions de lixiviation en deux étapes (troisième et quatrième variantes) :
- la teneur en H₂SO₄ de la solution de lixiviation nche en zinc et en fer est d'au moins 10 g/l ; autrement la durée de lixiviation est sensiblement prolongée
- la teneur en H₂SO₄ de ladite solution de lixiviation n'est pas supérieur à 35 g/l, de préférence pas supérieure à 25 g/l ; sinon il faut utiliser trop de calcine en (d)
- la teneur en Fe³⁺ de ladite solution de lixiviation est de 0,1-2 g/l, de préférence 0,5-1 g/l; si on descend en dessous de 0,1 g/l de Fe³⁺, on risque d'avoir les problèmes susmentionnés ; par contre, si on monte au-dessus de 2 g/l de Fe³⁺, on court le risque de former des jarosites de plomb et d'argent, ce qui rend la séparation du résidu de lixiviation riche en zinc d'avec la solution de lixiviation riche en zinc et en fer beaucoup plus difficile.
Il est avantageux d'oxyder au moins 30 %, de préférence au moins 40%, du soufre réactif dans la seconde étape de lixiviation. Si on oxyde moins de 30% de ce soufre dans la seconde étape, on risque de consommer trop d'acide dans la première étape de lixiviation et de former ainsi des jarosites de plomb et d'argent, qui non seulement gênent la lixiviation elle-même, mais qui peuvent en outre nuire ultérieurement à la récupération des métaux de valeur à partir du résidu de lixiviation pauvre en zinc. Il est particulièrement utile d'effectuer la première étape de lixiviation de manière à ce que la concentration en fer trivalent de la solution, qui sera forcément faible pendant la phase initiale de cette étape, atteigne une valeur de 2-10 g/l, de préférence de 3-7 g/l, dans la phase finale de cette étape. C'est en effet dans ces conditions que la vitesse et le rendement de lixiviation deviennent optimaux.
Il importe en outre de veiller à ce que la concentration en fer trivalent ne descende pas en-dessous de 0,1 g/l, de préférence pas en dessous de 0,2 g/l, au cours de ladite phase initiale, parce qu'autrement on risque d'avoir les problèmes susmentionnés : corrosion, formation de H₂S et disparition du cuivre de la solution. Il importe donc de veiller à ce que le potentiel soit d'au moins 530 mV et de préférence d'au moins 560 mV dans ladite phase initiale et il importe également de contrôler rigoureusement, notamment par des mesures de potentiel, la concentration en fer trivalent de la solution dans les autres phases de la première étape de lixiviation et d'ajuster au besoin cette concentration comme mentionné plus haut.
Comme il a déjà été signalé plus haut, il n'est pas indiqué de consommer trop d'acide dans la première étape de lixiviation. En fait, il convient de terminer cette étape à une concentration d'acide de 40-70 g/l, de préférence de 55-65 g/l. Il importe donc de veiller à ce que les quantités d'acide, de ferrite et de soufre (sous forme de résidu de lixiviation riche en zinc) introduites dans la première étape de lixiviation soient telles que la solution de lixiviation primaire ait une teneur en acide sulfurique de 55-65 g/l. La seconde étape de lixiviation est avantageusement effectuée de manière à maintenir la concentration en fer trivalent de la solution constamment au niveau susdit de 0,1-2 g/l, de préférence de 0,5-1 g/l, ceci pour éviter les problèmes susmentionnés.

D'autres détails et particularités de l'invention ressortiront de la description de deux modes de réalisation du procédé de l'invention, donnée à titre d'exemple non-limitatif et avec référence aux dessins ci-joints.
Dans ces dessins
- la figure 1 montre un schéma d'une usine à zinc existante, utilisant le procédé classique d'extraction de zinc ;
- la figure 2 montre un schéma d'une usine à zinc existante, qui a été adaptée pour mettre en oeuvre un mode de réalisation de la première variante du procédé de l'invention ;
- la figure 3 montre un schéma d'une usine à zinc existante, qui a été adaptée pour mettre en oeuvre un mode de réalisation de la quatrième variante du procédé de l'invention ;
- la figure 4 montre schématiquement l'installation utilisée pour effectuer les opérations (c) et (d) dans le mode de réalisation de la figure 3 ; et
- la figure 5 représente à plus grande échelle et de manière plus détaillée une cuve de l'installation de la figure 4.
Dans ces figures les mêmes chiffres de référence désignent des éléments identiques.

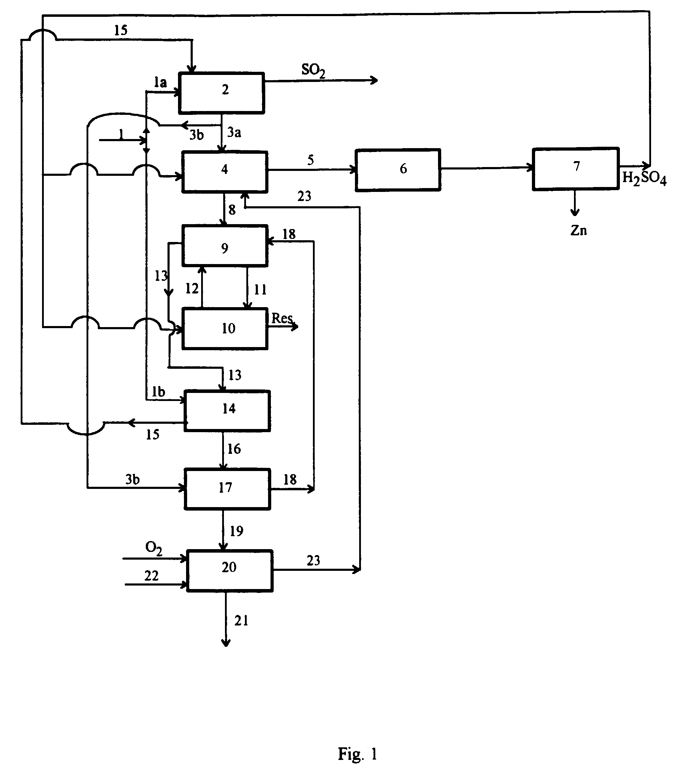

L'usine montrée à la figure 1 reçoit comme alimentation un concentré sulfuré de zinc 1. Une partie la de ce concentré est grillé en 2 et une partie 3a de la calcine ainsi produite est soumise en 4 à une lixiviation neutre avec de l'acide sulfurique de retour d'électrolyse. La solution 5 sortant de 4, qui est riche en zinc et en substance exempte de fer, est épurée en 6 et électrolysée en 7. Le résidu 8 de la lixiviation neutre, qui est constituée essentiellement de ferrite de zinc et de stérile, est introduit dans la première étape 9 d'une lixiviation acide à chaud, dans laquelle étape le ferrite est lixivié avec une solution 12 acide produite dans la seconde étape 10 de cette lixiviation acide à chaud. Dans la seconde étape 10 le résidu 11 produit en 9 est lixivié en milieu très acide avec de l'acide de retour d'électrolyse. Le résidu produit en 10 contient le stérile et des composés insolubles, notamment du sulfate de plomb. La solution 13 produite en 9 est une solution de lixiviation riche en zinc et en fer: environ 100 g/l Zn, 25-30 g/l Fe³⁺ et 50-60 g/l H₂SO₄. Cette solution est traitée dans une étape de réduction 14 avec une seconde partie 1b du concentré pour ramener sa teneur en Fe³⁺ en dessous de 5 g/l. Le résidu 15 produit en 14 est recyclé en 2 et la solution 16 à faible teneur en Fe³⁺ produite en 14 est traitée dans une étape de neutralisation 17 avec une seconde partie 3b de la calcine produite en 2 pour ramener sa teneur en acide en-dessous de 10 g/l. Le résidu de ferrite 18 produit en 17 est recyclé en 9 et la solution conditionnée 19 produite en 17 est traitée en 20 pour en séparer la majeure partie du fer, par exemple sous la forme de goethite 21. Dans ce cas on insuffle en 20 de l'oxygène dans la solution tout en la neutralisant de préférence avec de la calcine pure 22, obtenue par grillage de concentrés de ZnS purs, de manière à ne pas perdre du zinc sous forme de ferrite. La solution 23 produite en 20, qui est une solution riche en zinc et pauvre en fer, est recyclée en 4.

Il a déjà été proposé dans la littérature de modifier le procédé classique décrit ci-dessus dans ce sens que l'on supprime l'étape de réduction 14 et que l'on introduit la seconde partie 2a du concentré dans le première étape 9 de la lixiviation acide à chaud, qui devient alors une lixiviation acide réductrice à chaud.

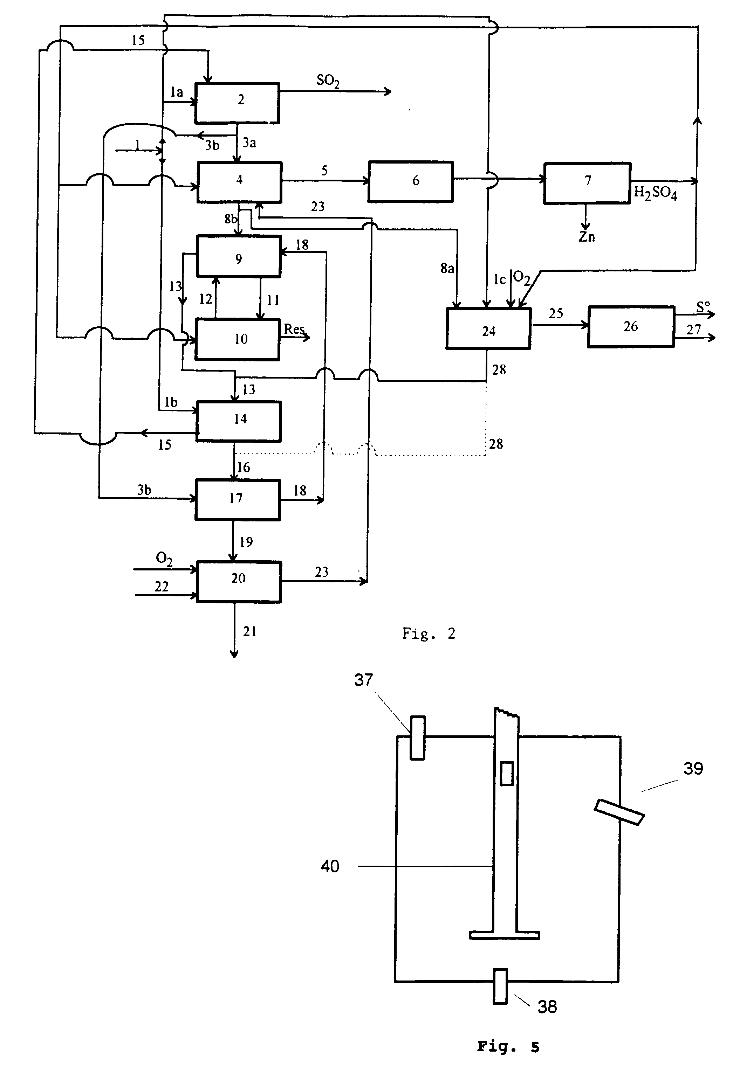

La figure 2 montre l'usine de la figure 1 après son adaptation pour mettre en oeuvre la première variante du procédé de l'invention. Une quantité additionnelle 1c du concentré et une partie 8a du ferrite sont maintenant lixiviées en une étape avec de l'acide de retour d'électrolyse en présence d'oxygène en 24 (opération (c)). Le reste 8b du ferrite est traité en 9. Le résidu de lixiviation pauvre en zinc 25 produit en 24 est traité en 26 pour en extraire le soufre élémentaire S° et les métaux de valeur 27. Lorsque la solution nche en zinc et en fer 28 produite en 24 requiert une réduction (ligne pleine), elle est ajoutée à la solution 13 (ou à la lixiviation réductrice à chaud, lorsque celle-ci est présente) ; autrement, elle est ajoutée à la solution 16 (ligne pointillée).

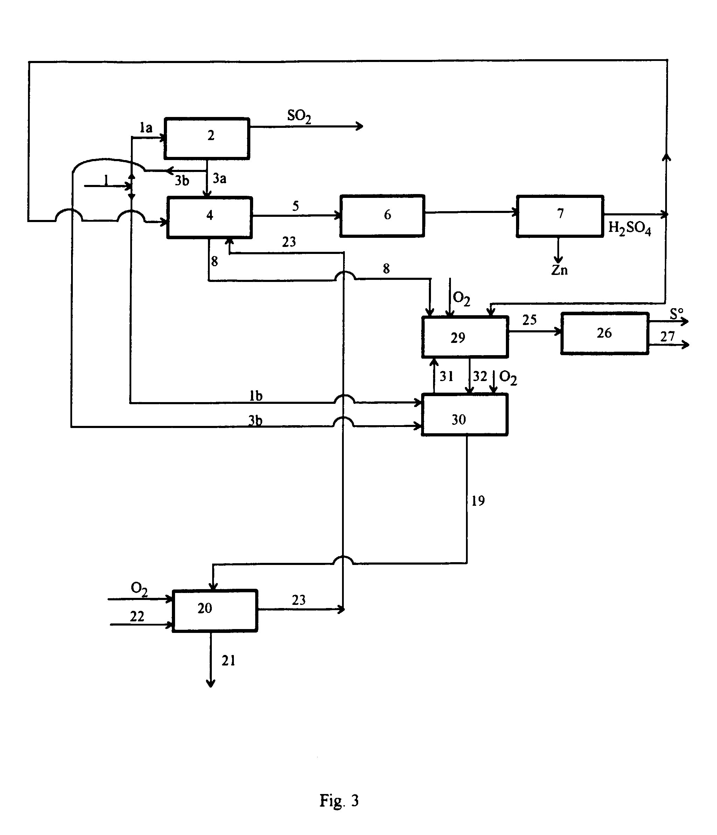

La figure 3 montre l'usine de la figure 1 après son adaptation pour mettre en oeuvre la quatrième variante du procédé de l'invention. Puisque la totalité du ferrite 8 est traitée maintenant dans l'opération (c) et que dans le mode de réalisation, qu'on va décrire, l'opération (d) est intégrée dans l'opération (c), les étapes 9, 10, 14 et 17 sont supprimées. L'opération (c) est effectuée en deux étapes 29 et 30. Dans la première étape 29 le ferrite 8 et le résidu de lixiviation riche en zinc 31, produite dans la seconde étape 30, sont lixiviés avec de l'acide de retour en présence d'oxygène. Le résidu de lixiviation pauvre en zinc 25 produit en 29 est traité, comme dans l'usine de la figure 2, en 26 pour extraire le soufre élémentaire S° et les métaux de valeur. Dans le seconde étape 30 une quantité additionnelle (substantielle) 1b de concentré est lixiviée en présence d'oxygène avec la solution 32, produite en 29. A la fin de la lixiviation en 30 on ajoute à la pulpe une partie 3b de la calcine de manière à ramener la teneur en acide de la solution en-dessous de 10 g/l, après quoi le résidu 31 est envoyé à la première étape 29 et la solution 19, qui est déjà conditionnée, à l'étape 20.
Il va de soi que l'équipement, qui est libéré par la suppression des étapes 9, 10, 14 et 17 peut être en majeure partie réutilisé pour la mise en oeuvre des étapes 29 et 30.

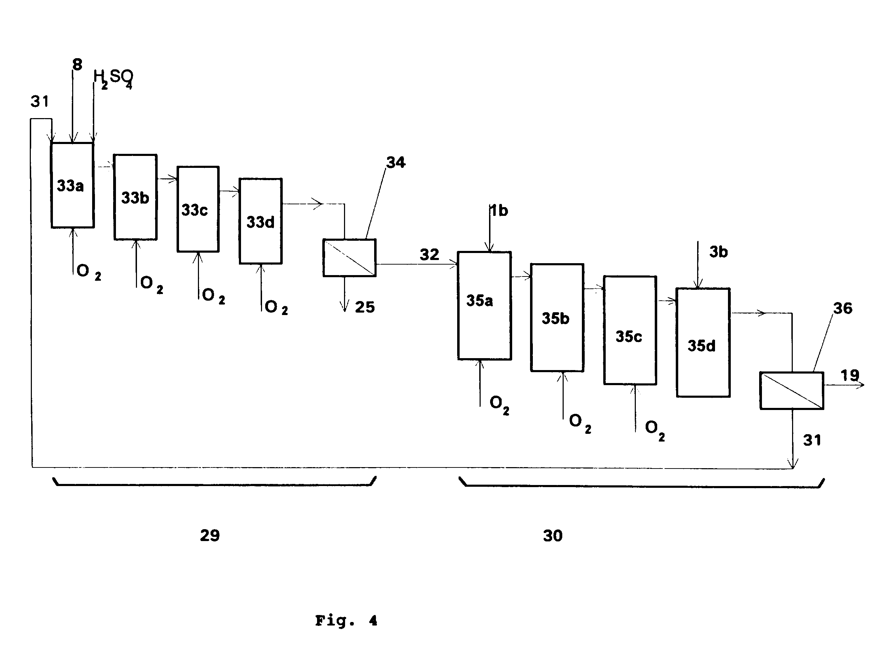

L'installation montrée à la figure 4 comporte une première série de quatre cuves de lixiviation 33a, 33b, 33c et 33d placées en cascade et suivies d'un séparateur solide-liquide 34 et une seconde série de trois cuves de lixiviation 35a, 35b et 35c également placées en cascade et suivie d'une cuve de neutralisation 35d et d'un séparateur solide-liquide 36. Chaque cuve déborde dans la cuve suivante, sauf les cuves 33d et 35d qui débordent respectivement dans les séparateurs 34 et 36. Le séparateur 34 est constitué d'un épaississeur et d'un appareil de filtration, et le séparateur 36 d'un appareil de filtration.

Les cuves de lixiviation sont fermées et munies, comme montré à la figure 5, d'une entrée 37 pour l'alimentation, d'une entrée 38 pour l'oxygène, d'un déversoir 39 et d'un agitateur auto-aspirant 40, par exemple un agitateur auto-aspirant à arbre creux ou à turbine hélicoïdale avec manchon d'aspiration. Cet agitateur a une triple fonction: maintenir les solides en suspension, aspirer et disperser l'oxygène dans le mélange réactionnel et assurer en permanence le recyclage de l'oxygène. Les cuves de lixiviation sont également équipées de dispositifs de mesure et de réglage non représentés pour mesurer le potentiel au sein et la pression au-dessus du mélange réactionnel ainsi que pour régler le débit d'oxygène en fonction de la pression et la vitesse de l'agitateur en fonction du potentiel ou vice versa. Ces cuves sont en outre munies d'un dispositif non représenté pour contrôler la température et d'un clapet de sûreté.
Au lieu d'être munies d'un seul agitateur à fonctions multiples, les cuves de lixiviation peuvent êtres équipées de deux agitateurs : un agitateur-mélangeur à vitesse constante placé axialement et servant à maintenir les solides en suspension et à disperser l'oxygène et un agitateur auto-aspirant à vitesse variable placé excentriquement et servant à recycler l'oxygène qui n'a pas réagi. Avec ce montage, il serait indiqué de régler le débit d'oxygène en fonction du potentiel et la vitesse de l'agitateur auto-aspirant en fonction de la pression.
La cuve de neutralisation 35d est munie d'une entrée pour l'alimentation, d'un déversoir, de moyens pour régler le débit de calcine en fonction de l'acidité et d'un dispositif pour contrôler la température.

Dans l'installation décrite ci-dessus on effectue la première étape de lixiviation 29 dans la première série de cuves et la seconde étape 30 dans la seconde série de cuves.
La cuve 33a est alimentée en continu d'un courant d'acide de retour, du courant de fond 8 d'un épaississeur non représenté qui sépare les produits de la lixiviation neutre 4, et de la phase solide 31 sortant de l'appareil de filtration 36 qui sépare les produits de la seconde étape de lixiviation 30 ; le courant 8 contient donc du ferrite de zinc et le courant 32 le résidu de lixiviation riche en zinc, ce résidu contenant également du ferrite de zinc, notamment le ferrite provenant de la calcine mise en oeuvre dans la cuve de neutralisation 35d.
Les produits de la première étape de lixiviation qui sortent de la cuve 33d sont séparés dans le séparateur 34 et le courant 32 de solution de lixiviation primaire ainsi obtenu est introduit en continu ensemble avec le courant 1b de concentré sulfuré de zinc dans la cuve 35a.
Les débits du courant d'acide de retour et des courants 1b, 3b et 8 sont tels que le rapport molaire entre le fer contenu dans les courants 8 et 32 et le soufre réactif contenu dans le courant 1b est d'environ 0,3 et que la teneur en acide sulfurique du courant sortant de la cuve 35c est d'environ 20 g/l.
La pulpe sortant de la cuve de neutralisation 35d a une teneur en acide sulfurique d'environ 5 g/l.
Les volumes des cuves sont tels que le temps de séjour du mélange réactionnel est d'environ 6 heures dans la première série de cuves et d'environ 5 heures dans la seconde série de cuves.
Dans chaque cuve de lixiviation, le potentiel de la solution est maintenu à un niveau approprié, notamment à 560-610 mV (NHE) dans 33a à 590-630 mV dans 33b, à 610-650 mV dans 33c, à 640-660 mV dans 33d,et à 560-620 mV dans 35a, 35b et 35c. Le contrôle du potentiel et, partant, de la teneur en fer trivalent de la solution est réalisé par les dispositifs de mesure et de réglage précités.

Dans chaque cuve de lixiviation, la température est maintenue à environ 90°C et la surpression y reste à un niveau très bas, par exemple à 5-20 cm d'eau, voire moins, grâce à l'action de l'agitateur auto-aspirant.
L'action des dispositifs de mesure et de réglage précités suffira normalement pour maintenir le potentiel au niveau voulu. Si toutefois ces dispositifs s'avéraient pour une raison quelconque incapables de maintenir à eux seuls le potentiel au niveau voulu, on pourrait encore intervenir en faisant varier la température.
En travaillant comme décrit ci-dessus, on oxyde environ 45 % du soufre réactif dans la seconde étape de lixiviation et on atteint un rendement de lixiviation du zinc d'environ 98 %, ceci donc avec une durée de lixiviation totale d'environ 11 heures. Le cuivre présent dans le concentré 1b se retrouve presqu'entièrement dans la solution de lixiviation 19, d'où il sera séparé ultérieurement, et le plomb et l'argent du concentré se retrouvent dans le résidu de lixiviation 25, d'où ils peuvent être facilement séparés par flottation du fait que ce résidu est pratiquement exempt de jarosites.
Les courants 1a et 1b peuvent évidemment avoir la même composition ou une composition différente.
Le nombre de cuves peut varier. En effet, le rendement de lixiviation augmente jusqu'à un certain point avec le nombre de cuves, parce qu'avec un nombre grandissant de cuves on peut affiner favorablement le profil de potentiel que l'on désire imposer à la première étape de lixiviation et on augmente en même temps la probabilité que toutes les particules de minerai subissent la lixiviation durant le temps requis. Inutile de dire toutefois que le prix de l'installation augmente également avec le nombre de cuves. Le choix de ce nombre sera donc régi par des considérations d'ordre technique et économique.

Un avantage majeur du procédé de l'invention, à savoir le raccourcissement de la durée de l'opération (c) est illustré par les exemples donnés ci-après.

### Exemple 1

Cet exemple décrit un essai de lixiviation en une étape (opération (c) )selon le procédé de l'invention.

### Matières de départ utilisées

(α) 2 kg d'une blende ayant la composition suivante, en % en poids : 53,9 Zn, 5,6 Fe, 2,32 Pb, 30,5 S^{tot}, 29,0 S²-réactif (= S^{tot} moins S pyritique) et 0,02 Cu, cette blende a une grosseur de grain de 90% inférieurs à 44 mm ;
(β) 1215 g d'un femte de zinc ayant la composition suivante, en % en poids : 20,9 Zn, 30,4 Fe et 5,78 Pb ;
(γ) 22,5 l d'un acide de retour cellule à 189 g/l de H₂SO₄ ;
Le rapport molaire entre le fer contenu dans (β) et le soufre réactif contenu dans (α) s'élève à 0,36.

### Appareillage utilisé

Une cuve fermée d'un contenu de 30 1 équipée d'une entrée pour l'alimentation, d'une entrée pour l'oxygène, d'un agitateur, d'une sonde potentiomètrique et de moyens pour contrôler la température.

### Lixiviation

On ajoute (α) et (β) à (γ) en 60 minutes et on augmente en même temps la température progressivement de 75 à 90°C. Au bout de cette opération la presque totalité du femte est dissoute. Alors, on commence à insuffler de l'oxygène et on continue à lixivier. On arrête la réaction après 7,5 h.
Le tableau 1 ci-dessous donne l'évolution des principaux paramètres au cours de la lixiviation.

**Tableau 1**

| Temps h | mV (NHE) | T °C | Fe²⁺ g/l | Fe³⁺ g/l | H₂SO₄ g/l |
|---|---|---|---|---|---|
| 1 | 590 | 90 | 10,6 | 0,2 | 120 |
| 2 | 593 | 90 | 14,0 | 0,6 | 89 |
| 3 | 595 | 90 | 15,4 | 0,7 | 79 |
| 4 | 597 | 90 | 15,6 | 0,8 | 70 |
| 5 | 603 | 90 | 16,1 | 1,0 | 65 |
| 6 | 610 | 90 | 15,4 | 1,6 | 60 |
| 7 | 617 | 90 | 14,8 | 2,1 | 56 |
| 7,5 | 625 | 90 | 14,4 | 2,6 | 53 |

On filtre la pulpe et on obtient 26,5 l de solution de lixiviation riche en zinc et en fer et 1095 g de résidu pauvre en zinc.

La solution de lixiviation nche en zinc et en fer contient, en g/l : 14,4 Fe²⁺, 2,6 Fe³⁺, et 53 H₂SO₄.
Le résidu pauvre en zinc contient à l'état sec, en % en poids : 5,9 Zn, 1,3 Fe,10,0 Pb, 57 S^{tot}, 52 S° et 0,04 Cu.
Le rendement de lixiviation du zinc s'élève à 95,2 %.

### Exemple 2

Cet exemple décrit un essai de lixiviation en deux étapes (opération (c)) selon le procédé de l'invention.

### Matières de départ utilisées

(α) comme dans l'exemple 1
(β') 937 g d'un ferrite de zinc ayant la même composition que celui de l'exemple 1 ;
(γ') 14,8 l d'un acide de retour cellule ayant la même composition que celui de l'exemple 1;
(δ) 1429 g d'un résidu de lixiviation riche en zinc ayant la composition suivante, en % en poids : 42,4 Zn, 4,5 Fe, 3,18 Pb, 42,9 S^{tot}, 21,5 S²⁻réactif, 18,8 S° et 0,05 Cu; ce résidu a été obtenu au cours d'une opération antérieure qui était sensiblement identique à la seconde étape de lixiviation qui sera décrite ci-après, ce qui veut dire qu'on va oxyder 47,0% du soufre réactif contenu dans (α) dans cette seconde étape de lixiviation.
Le rapport molaire entre le fer contenu dans (β') et le soufre réactif contenu dans (α) est donc de 0,28, tandis que le rapport molaire entre le fer contenu dans (β') et le soufre réactif contenu dans (δ) est de 0,53.

### Appareillage utilisé

Comme dans l'exemple 1, excepté que la cuve fermée a un contenu de 20 l.

### Première étape de lixiviation

On ajoute d'abord (δ) à (γ') en 30 minutes et ensuite (β') en 60 minutes en augmentant durant la première heure de cette opération de chargement la température progressivement de 75 à 90°C. On n'insuffle de l'oxygène durant le chargement que lorsque le potentiel de la pulpe descend en-dessous de 560 mV. En ajoutant d'abord (δ) à (γ') on abaisse le potentiel de la solution jusqu'au niveau de 560-610 mV, où - comme l'a constaté la demanderesse - le ferrite de zinc se dissout le plus vite. (L'acide de retour cellule (γ') a un potentiel sensiblement supérieur à 610 mV. Dans une lixiviation en batch il importe donc de prendre des mesures pour que le potentiel de l'acide soit rapidement ramené au niveau de 560-610 mV. De telles mesures ne s'imposent généralement pas dans une lixiviation en continu, parce que la pulpe à laquelle on ajoute dans ce cas l'acide de retour cellule, le ferrite de zinc et le résidu de lixiviation riche en zinc, aura presque toujours un potentiel inférieur à 610 mV.) Une fois le chargement terminé, on commence à introduire de l'oxygène dans la cuve et on fait s'accroître le potentiel de la solution graduellement en augmentant le débit d'oxygène de manière à obtenir une valeur de 630-650 mV après 6h de lixiviation. Le tableau 2 ci-dessous donne l'évolution des principaux paramètres au cours de cette première étape de lixiviation.

**Tableau 2**

| Temps h | mV (NHE) | T °C | Fe²⁺ g/l | Fe³⁺ g/l | H₂SO₄ g/l |
|---|---|---|---|---|---|
| 1 | 571 | 90 | 5 | 0,15 | 157 |
| 2 | 568 | 90 | 15,5 | 0,8 | 91 |
| 3 | 588 | 90 | | | |
| 4 | 601 | 90 | 16,8 | 2,3 | 68 |
| 5 | 621 | 90 | | | |
| 6 | 638 | 90 | 12,5 | 6,1 | 56 |

On filtre la pulpe et on obtient une solution de lixiviation primaire et 974 g de résidu pauvre en zinc.
La solution de lixiviation primaire (ε) contient, en g/l : 12,5 Fe²⁺, 6,1 Fe³⁺ et 56 H₂SO₄.
Le résidu pauvre en zinc contient à l'état sec, en % en poids : 3,2 Zn, 1,45 Fe, 9,2 Pb, 58 S^{tot}, 55 S° et 0,03 Cu.

### Seconde étape de lixiviation

On ajoute la blende (α) en continu à la solution de lixiviation primaire (ε) dans un intervalle de temps de 60 minutes en faisant monter en même temps la température de 65 °C à 85 °C. On règle le débit d'oxygène de manière à maintenir le potentiel de la solution entre 560 et 590 mV. On arrête la lixiviation après 5h.

Le tableau 3 ci-dessous donne l'évolution des principaux paramètres au cours de cette seconde étape de lixiviation.

**Tableau 3**

| Temps h | mV (NHE) | T °C | Fe²⁺ g/l | Fe³⁺ g/l | H₂SO₄ g/l |
|---|---|---|---|---|---|
| 0,.5 | | 75 | | | |
| 1 | 561 | 85 | 16,5 | 0,6 | 52 |
| 2 | 570 | 85 | 16,8 | 1,1 | 40 |
| 3 | 578 | 85 | 16,9 | 0,9 | 30 |
| 4 | 580 | 85 | 17,1 | 1,1 | 22 |
| 5 | 574 | 85 | 17,2 | 1,0 | 17 |

Après filtration de la pulpe on obtient une solution de lixiviation nche en zinc et le résidu de lixiviation riche en zinc (δ).
La solution de lixiviation riche en zinc contient, en g/l : 17,2 Fe²⁺, 1,0 Fe³⁺ et 17 H₂SO₄.
Le rendement de lixiviation du zinc est de 98 %, ceci donc après une durée de lixiviation de 11 heures.

### Exemple 3

Cet exemple comparatif décrit un essai de lixiviation en deux étapes (opération (c)) selon le procédé de l'art antérieur discuté plus haut (EP-A-0451456).

### Matières de départ utilisées

(α) comme dans l'exemple 1 ;
(β") 1215 g d'un ferrite de zinc ayant la même composition que celui de l'exemple 1;
(γ") 16,6 l d'un acide de retour cellule ayant la même composition que celui de l'exemple 1;
(δ') 1008 g d'un résidu de lixiviation riche en zinc ayant la composition suivante, en % en poids : 19,8 Zn, 2,05 Fe, 4,5 Pb, 59 S^{tot}, 10,3 S²⁻ réactif, 48 S° et 0,15 Cu ; ce résidu a été obtenu au cours d'une opération antérieure qui était sensiblement identique à la seconde étape de lixiviation qui sera décrite ci-après, ce qui veut dire que cette fois-ci on va oxyder 82,1 % du soufre réactif contenu dans (α) dans la seconde étape de lixiviation.
Le rapport molaire entre le fer contenu dans (β") et le soufre réactif contenu dans (α) est ici de 0,36, c'est-à-dire un peu plus élévé et donc plus favorable que dans l'exemple 2, tandis que le rapport molaire entre le fer contenu dans (β") et le soufre réactif contenu dans (δ') est maintenant de 2,03.

### Appareillage utilisé

### Comme dans l'exemple 2.

### Première étape de lixiviation

On effectue le chargement comme dans l'exemple 2, c'est-à-dire que l'on ajoute d'abord (δ') à (γ") en 30 minutes et ensuite (β") en 60 minutes en augmentant durant la première heure la température progressivement de 75 à 90°C. Puis on continue à lixivier et on arrête la lixiviation après 4h.
On n'est pas parvenu à faire descendre le potentiel du mélange réactionnel jusqu'au niveau de 560-610 mV propice à la dissolution du ferrite, probablement à cause de la faible teneur en soufre réactif de (δ').
Le tableau 4 ci-dessous donne l'évolution des principaux paramètres au cours de cette première étape de lixiviation.

**Tableau 4**

| Temps h | mV (NHE) | T °C | Fe²⁺ g/l | Fe³⁺ g/l | H₂SO₄ g/l |
|---|---|---|---|---|---|
| 1 | 640 | 90 | 4,2 | 0,5 | 166 |
| 2 | 679 | 90 | 10,8 | 4,2 | 105 |
| 3 | 665 | 90 | 14,3 | 3,5 | 97 |
| 4 | 655 | 90 | 15,8 | 3,4 | 94 |

On filtre la pulpe et on obtient une solution de lixiviation primaire et 1079 g de résidu pauvre en zinc.
La solution de lixiviation primaire (ε') contient, en g/l : 15,8 Fe²⁺, 3,4 Fe³⁺ et 94 H₂SO_{4.}

Le résidu pauvre en zinc contient à l'état sec, en % en poids : 3 Zn, 1,7 Fe, 10,3 Pb, 56 S^{tot}, 53 S° et 0,17 Cu.

### Seconde étape de lixiviation

On ajoute la blende (α) en continu à la solution de lixiviation primaire (ε') dans un intervalle de temps de 60 minutes en faisant monter en même temps la température de 65 °C à 85 °C. On règle le débit d'oxygène de façon à maintenir le potentiel de la solution entre 560 et 590mV, comme dans l'exemple 2. Cependant, après environ neuf heures de lixiviation on ne parvient plus à maintenir le potentiel en-dessous de 590 mV, ce qui signifie apparemment que la réactivité de la blende est devenue très faible. On continue néanmoins à insuffler de l'oxygène afin de faire réagir davantage la blende et on arrête la lixiviation après 16 h.

Le tableau 5 ci-dessous donne l'évolution des principaux paramètres au cours de cette seconde étape de lixiviation

**Tableau 5**

| Temps h | mV (NHE) | T °C | Fe²⁺ g/l | Fe³⁺ g/l | H₂SO₄ g/l |
|---|---|---|---|---|---|
| 1 | 567 | 85 | 19,70 | 0,1 | 101,5 |
| 2 | 579 | 85 | 20,30 | 0,35 | 92,5 |
| 4 | 589 | 85 | 21,20 | 0,60 | 75,5 |
| 8 | 589 | 85 | 22,20 | 0,90 | 57,0 |
| 10 | 598 | 85 | 22,95 | 0,90 | 52,2 |
| 12 | 611 | 85 | 22,40 | 1,90 | 41,5 |
| 14 | 613 | 85 | 22,35 | 2,45 | 32,5 |
| 16 | 619 | 85 | 21,85 | 3,25 | 22,0 |

Après filtration de la pulpe on obtient une solution de lixiviation riche en zinc et le résidu de lixiviation riche en zinc (δ").
La solution de lixiviation riche en zinc contient, en g/l : 20,2 Fe²⁺, 2,8 Fe³⁺ et 22 H₂SO₄.
Le rendement de lixiviation du zinc est de 98 %, ceci donc après une durée totale de lixiviation de 20 heures.

Lorsqu'on compare ces exemples, on voit que le temps requis pour réaliser l'opération (c) dans le procédé de l'art antérieur dépasse de 114% celui, requis pour réaliser cette opération avec pratiquement le même rendement dans la première et deuxième variantes du procédé de l'invention, et de 82% celui requis pour réaliser cette opération avec le même rendement dans la troisième et quatrième variantes du procédé de l'invention. Ceci revient à dire qu'avec le procédé de l'invention on fait autant dans 0,47 volume de réacteur (1e et 2e variantes) ou dans 0,55 volume de réacteur (3e et 4e variantes) qu'avec le procédé de l'art antérieur dans 1 volume de réacteur.
L'exploitation industrielle du procédé de l'invention entraînera donc des coûts d'investissement qui seront de loin inférieurs à ceux du procédé de l'art antérieur.

Il est évident que certaines particularités de l'opération (c), que l'on vient de décrire en relation avec le procédé de l'invention, peuvent être très utiles dans un autre contexte que celui du procédé de l'invention décrit ci-dessus.
C'est pourquoi la demanderesse demande également protection pour un procédé pour lixivier du ferrite de zinc ensemble avec une matière sulfurée contenant du sulfure de zinc, suivant lequel on effectue la lixiviation avec une solution d'acide sulfunque à 60-95°C en des conditions atmosphériques de manière à produire une solution de lixiviation chargée de zinc et de fer et un résidu de lixiviation pauvre en zinc et en fer, ce procédé étant caractérisé en ce que
(1) on travaille avec un rapport matière sulfurée : ferrite tel que la quantité de soufre réactif présente dans la matière sulfurée soit sensiblement supérieure à celle qui peut être oxydée par le fer présent dans le ferrite, le soufre réactif étant le soufre qui est présent à l'état de sulfure et qui peut être transformé en soufre élémentaire par le sulfate ferrique,
(2) on introduit en continu un courant de matière sulfurée, un courant de ferrite et un courant d'acide dans la première cuve d'une série de cuves, on fait passer la pulpe ainsi formée successivement à travers les autres cuves de la série, on introduit un courant d'oxygène dans ces autres cuves et on maintient dans chaque cuve de la série des conditions telles que la pulpe sortant de la dernière cuve soit constituée de solution de lixiviation chargée de zinc et de fer et de résidu de lixiviation pauvre en zinc et en fer, et
(3) on veille à ce que le potentiel de la pulpe ne descende pas en dessous de 530 mV (NHE) et de préférence pas en dessous de 560 mV dans la première cuve.

La matière sulfurée peut être un concentré sulfuré de zinc ou un concentré sulfuré de zinc partiellement lixivié.
On peut s'abstenir d'introduire de l'oxygène dans la première cuve et y maintenir le potentiel à au moins 530 mV en y travaillant avec un rapport matière sulfurée : ferrite suffisamment faible et/ou à une température suffisamment faible.
On peut également maintenir le potentiel dans la première cuve à au moins 530 mV en y introduisant un courant d'oxygène approprié.

## Revendications

1. Procédé d'extraction de zinc de concentrés sulfurés de zinc comportant les opérations suivantes :
(a) le grillage d'une partie des concentrés de manière à produire de la calcine,
(b) la lixiviation neutre de calcine, produite dans l'opération (a), avec une solution d'acide sulfurique de retour d'électrolyse de manière à produire une solution de lixiviation riche en zinc et en substance exempte de fer, qui est séparée, et un résidu de ferrite de zinc, qui est séparé,
(c) la lixiviation d'une autre partie des concentrés et d'au moins une partie du résidu de ferrite de zinc, produit dans l'opération (b), avec une solution d'acide sulfurique de retour d'électrolyse à 60-95°C sous une pression égale à ou s'écartant moins de 20 kPa de la pression atmosphérique et en présence d'oxygène finement dispersé de manière à produire une solution de lixiviation riche en zinc et en fer, qui est séparée, et un résidu de lixiviation pauvre en zinc, qui est séparé, les quantités de concentrés et de ferrite de zinc mises en oeuvre dans cette opération (c) étant telles que le rapport molaire entre le fer contenu dans le ferrite et le soufre réactif contenu dans les concentrés soit d'au moins environ 0,2, le soufre réactif étant le soufre qui est présent à l'état de sulfure et qui peut être transformé en soufre élémentaire par le sulfate ferrique,
(d) le conditionnement, préparatoire à l'opération suivante, de la solution de lixiviation riche en zinc et en fer, produite dans l'opération (c),
(e) la précipitation de la majeure partie du fer contenu dans la solution, conditionnée dans l'opération (d), de manière à produire une solution nche en zinc et pauvre en fer et un précipité ferrifère, qui est séparé, et
(f) l'introduction de la solution riche en zinc et pauvre en fer dans la lixiviation neutre en (b),
ce procédé étant caracténsé en ce que
(1) on lixivie dans l'opération (b) seulement une partie de la calcine, produite dans l'opération (a),
(2) on effectue la lixiviation en (c)
- soit en une seule étape, dans lequel cas on travaille de manière à ce que la solution de lixiviation riche en zinc et en fer ait une teneur en acide sulfurique de 45-75 g/l, de préférence de 55-65 g/l, et une teneur en Fe³⁺ de 1-10 g/l, de préférence de 2-5 g/l,
- soit en deux étapes, dans lequel cas on travaille de manière à ce que la solution de lixiviation nche en zinc et en fer ait une teneur en acide sulfurique de 10-35 g/l, de préférence de 10-25 g/l et une teneur en Fe³⁺ de 0,1-2 g/l, de préférence de 0,5-1 g/l, la première étape consistant à traiter le femte de zinc et un résidu de lixiviation riche en zinc, produit dans la seconde étape, avec la solution d'acide sulfurique de retour d'électrolyse en présence d'oxygène finement dispersé de manière à produire une solution de lixiviation primaire et ledit résidu de lixiviation pauvre en zinc, qui sont séparés, et la seconde étape consistant à traiter les concentrés avec ladite solution de lixiviation primaire en présence d'oxygène finement dispersé de manière à produire ladite solution de lixiviation riche en zinc et en fer et ledit résidu de lixiviation riche en zinc, qui sont séparés, cette seconde étape étant effectuée en des conditions telles que moins de 60% et de préférence moins de 50% du soufre réactif y soient oxydés et que le résidu de lixiviation riche en zinc y produit ait une teneur en soufre réactif qui est sensiblement supérieure à celle qui peut être oxydée dans la première étape par le fer présent dans le ferrite,
(3) on effectue l'opération (d) en traitant la solution de lixiviation nche en zinc et en fer avec encore une autre partie des concentrés de manière à ramener sa teneur en Fe³⁺ en-dessous de 5 g/l et de préférence à 1-3 g/l, ce traitement réducteur pouvant être omis lorsque la solution de lixiviation riche en zinc et en fer a déjà une teneur en Fe³⁺ de moins de 5 g/l, et en traitant la solution à faible teneur en Fe³⁺ avec une autre partie de la calcine, produite dans l'opération (a), de manière à ramener la teneur en H₂SO₄ libre de cette solution en dessous de 10 g/l et de préférence à 3-5 g/l, ce traitement de neutralisation produisant d'une part un résidu de ferrite de zinc, qui est séparée et ensuite traité de la même façon que le ferrite produit dans l'opération (b), et d'autre part une solution conditionnée,
(4) on effectue l'opération (e) en précipitant le fer d'une manière connue en soi sous la forme de goethite, hématite, jarosite ou autre composé dont la filtrabilité est convenable, ceci en l'absence de concentré sulfuré de zinc, et
(5) on lixivie dans l'opération (c)
- soit la totalité du résidu de ferrite produit dans les opérations (b) et (d),
- soit une partie seulement de ce ferrite, dans lequel cas on traite le reste de ce ferrite séparément d'une manière connue en soi par lixiviation acide à chaud, ce traitement produisant une autre solution de lixiviation riche en zinc et en fer, et on fait subir à cette solution les opérations (d), (e) et (f) ensemble avec la solution de lixiviation riche en zinc et en fer produite dans l'opération (c).

2. Procédé selon la revendication 1, caractérisé en ce que, lorsqu'on effectue la lixiviation en (c) en une étape, on introduit en continu un courant de ferrite de zinc, un courant de concentré sulfuré de zinc et de solution d'acide sulfurique de retour d'électrolyse dans la première cuve d'une série de cuves à débordement placées en cascade, on maintient dans chacune de ces cuves des conditions telles que la pulpe débordant de la dernière cuve soit constituée de solution de lixiviation riche en zinc et en fer et de résidu de lixiviation pauvre en zinc, on fait déborder la dernière cuve dans un séparateur solide-liquide qui sépare le résidu de lixiviation pauvre en zinc de la solution de lixiviation riche en zinc et en fer.

3. Procédé selon la revendication 1, caractérisé en ce que, lorsqu'on effectue la lixiviation en (c) en deux étapes, on oxyde au moins 30 %, de préférence au moins 40 %, du soufre réactif dans le seconde étape de lixiviation.

4. Procédé selon la revendication 3, caractérisé en ce que l'on effectue la première étape de lixiviation de manière à ce que la concentration en Fe³⁺ de la solution atteigne une valeur de 2-10 g/l, de préférence de 3-7 g/l, dans la phase finale de cette étape.

5. Procédé selon la revendication 4, caractérisée en ce que l'on veille à ce que ladite concentration soit d'au moins 0,1 g/l, de préférence d'au moins 0,2 g/l, dans la phase initiale de ladite étape.

6. Procédé selon l'une quelconque des revendications 3-5, caractérisé en ce que les quantités d'acide, de ferrite et de soufre réactif introduites dans la première étape de lixiviation sont telles que la solution de lixiviation primaire ait une teneur en acide sulfurique de 40-70 g/l.

7. Procédé selon l'une quelconque des revendications 3-6, caractérisé en ce que l'on maintient dans la seconde étape de lixiviation la concentration en Fe³⁺ de la solution constamment à un niveau de 0,1-2 g/l, de préférence de 0,5-1 g/l.

8. Procédé selon l'une quelconque des revendications 3-7, caractérisé en ce qu'avant de séparer la solution de lixiviation riche en zinc et en fer du résidu de lixiviation riche en zinc, on ajoute ladite autre partie de la calcine à la pulpe, en intégrant ainsi l'opération (d) dans l'opération (c).

9. Procédé selon la revendication 8, caractérisé en ce que l'on introduit en continu un courant de ferrite de zinc, de résidu de lixiviation riche en zinc et de solution d'acide sulfurique de retour d'électrolyse dans la première cuve d'une première série de cuves à débordement placées en cascade, on maintient dans chacune de ces cuves des conditions telles que la pulpe débordant de la dernière cuve soit constituée de solution de lixiviation primaire et de résidu de lixiviation pauvre en zinc, on fait déborder la dernière cuve dans un séparateur solide-liquide qui sépare le résidu de lixiviation pauvre en zinc de la solution de lixiviation primaire, on introduit en continu cette solution de lixiviation primaire ensemble avec un courant de concentré sulfuré de zinc dans la première cuve d'une seconde série de cuves à débordement placées en cascade, on maintient dans chaque cuve de cette seconde série des conditions telles que la pulpe débordant de la dernière cuve soit constituée de solution de lixiviation riche en zinc et en fer et de résidu de lixiviation riche en zinc, on fait déborder la dernière cuve de cette série dans une cuve de neutralisation, dans laquelle on ajoute ladite autre partie de la calcine à la pulpe, on fait déborder la cuve de neutralisation dans un séparateur solide-liquide qui sépare la solution de lixiviation riche en zinc et en fer, qui est déjà conditionnée, du résidu de lixiviation riche en zinc et on recycle ce résidu vers la première cuve de la première série.

10. Procédé selon la revendication 2 ou 9 , caractérisé en ce qu'afin de maintenir les conditions précitées, on équipe les cuves d'un agitateur auto-aspirant, on les relie à une source d'oxygène et on règle la vitesse de l'agitateur et l'amenée de l'oxygène de manière à maintenir le potentiel dans chaque cuve à un niveau prédéterminé.

11. Procédé pour lixivier du ferrite de zinc ensemble avec une matière sulfurée contenant du sulfure de zinc, suivant lequel on effectue la lixiviation avec une solution d'acide sulfurique à 60-95°C sous une pression égale à ou s'écartant moins de 20 kPa de la pression atmosphérique de manière à produire une solution de lixiviation chargée de zinc et de fer et un résidu de lixiviation pauvre en zinc et en fer, les quantités de matière sulfurée et de ferrite mises en oeuvre étant telles que le rapport molaire entre le fer contenu dans le ferrite et le soufre réactif contenu dans la matière sulfurée soit d'au moins environ 0,2, le soufre réactif étant le soufre qui est présent à l'état de sulfure et qui peut être transformé en soufre élémentaire par le sulfate ferrique, ce procédé étant caractérisé en ce que
(1) on travaille avec un rapport matière sulfurée : ferrite tel que la quantité de soufre réactif présente dans la matière sulfurée soit sensiblement supérieure à celle qui peut être oxydée par le fer présent dans le ferrite,
(2) on introduit en continu un courant de matière sulfurée, un courant de ferrite et un courant d'acide dans la première cuve d'une série de cuves, on fait passer la pulpe ainsi formée successivement à travers les autres cuves de la série, on introduit un courant d'oxygène dans ces autres cuves et on maintient dans chaque cuve de la série des conditions telles que la pulpe sortant de la dernière cuve soit constituée de solution de lixiviation chargée de zinc et de fer, contenant 45-70 g/l d'acide sulfurique et 2-10 g/l de Fe ³⁺, et de résidu de lixiviation pauvre en zinc et en fer, et
(3) on veille à ce que le potentiel de la pulpe ne descende pas en dessous de 530 mV (NHE) et de préférence pas en dessous de 560 mV dans la première cuve.

12. Procédé selon la revendication 11, caractérisée en ce que l'on s'abstient d'introduire de l'oxygène dans la première cuve et on y maintient le potentiel à au moins 530 mV en y travaillant avec un rapport matière sulfurée : ferrite suffisamment faible et/ou à une température suffisamment faible.

13. Procédé selon la revendication 11, caractérisé en ce qu'on maintient le potentiel à au moins 530 mV dans la première cuve en y introduisant un courant d'oxygène approprié.

## Patentansprüche

1. Verfahren zur Gewinnung von Zink aus Zinksulfidkonzentraten mit den folgenden Arbeitsgängen:
(a) ein Teil der Konzentrate wird zwecks Bildung von Kalzinat geröstet
(b) in Arbeitsgang (a) gebildetes Kalzinat wird mit einer aus der Elektrolyse zurückgeführten Lösung von Schwefelsäure neutral ausgelaugt, um eine zinkreiche und im wesentlichen eisenfreie Auslaugungslösung, die abgetrennt wird, und einen Zinkferritrückstand, der abgetrennt wird, zu erzeugen,
(c) ein weiterer Teil der Konzentrate und zumindest ein Teil des in Arbeitsgang (b) gebildeten Zinkferritrückstands wird mit einer Lösung von aus der Elektrolyse zurückgeführten Schwefelsäure bei 60-95°C drucklos oder unter einem sich vom atmosphärischen Druck um nicht mehr als 20 kPa unterscheidenden Druck und in Gegenwart von feinverteiltem Sauerstoff ausgelaugt, um eine zink- und eisenreiche Auslaugungslösung, die abgetrennt wird, sowie einen zinkverarmten Auslaugungsrückstand, der abgetrennt wird, zu erzeugen, wobei die bei diesem Arbeitsgang (c) eingesetzten Mengen an Konzentraten und Zinkferrit so gewählt werden, daß das Molverhältnis des in dem Ferrit enthaltenen Eisens und des in den Konzentraten enthaltenen reaktionsfähigen Schwefels zumindest etwa 0,2 beträgt, wobei es sich bei dem reaktionsfähigen Schwefel um den als Sulfid vorliegenden Schwefel handelt, der durch das Ferrisulfat in elementaren Schwefel umgewandelt werden kann,
(d) die in Arbeitsgang (c) erzeugte zink- und eisenreiche Auslaugungslösung wird vor dem nächsten Arbeitsgang konditioniert,
(e) der Großteil des in der in Arbeitsgang (d) konditionierten Lösung enthaltenen Eisens wird ausgefällt, um eine zinkreiche und eisenverarmte Lösung sowie einen eisenhaltigen Niederschlag zu erzeugen, der abgetrennt wird, und
(f) die zinkreiche und eisenverarmte Lösung wird in die neutrale Auslaugung in (b) eingetragen,
wobei das Verfahren dadurch gekennzeichnet ist, daß
(1) nur ein Teil des in Arbeitsgang (a) gebildeten Kalzinats in Arbeitsgang (b) ausgelaugt wird,
(2) die Auslaugung in (c)
- entweder in einer einzigen Stufeerfolgt, wobei man so vorgeht, daß die zink- und eisenreiche Auslaugungslösung einen Schwefelsäuregehalt von 45-75 g/l, vorzugsweise von 55-65 g/l, sowie einen Fe³⁺-Gehalt von 1-10 g/l, vorzugsweise von 2-5 g/l aufweist,
- oder in zwei Stufen erfolgt, wobei man so vorgeht, daß die zink- und eisenreiche Auslaugungslösung einen Schwefelsäuregehalt von 10-35 g/l, vorzugsweise von 10-25 g/l, sowie einen Fe³⁺-Gehalt von 0,1-2 g/l, vorzugsweise von 0,5-1 g/l aufweist, wobei in der ersten Stufe der Zinkferrit und ein in der zweiten Stufe erzeugter zinkreicher Auslaugungsrückstand mit der aus der Elektrolyse zurückgeführten Schwefelsäurelösung in Gegenwart von feinverteiltem Sauerstoff behandelt werden, um so eine primäre Auslaugungslösung und besagten zinkverarmten Auslaugungsrückstand zu erzeugen, und in der zweiten Stufe die Konzentrate mit besagter primärer Auslaugungslösung in Gegenwart von feinverteiltem Sauerstoff behandelt werden, um besagte zink- und eisenreiche Auslaugungslösung sowie besagten zinkreichen Auslaugungsrückstand zu erzeugen, die abgetrennt werden, und diese zweite Stufe unter solchen Bedingungen durchgeführt wird, daß dabei weniger als 60% und vorzugsweise weniger als 50% des reaktionsfähigen Schwefels oxidiert wird und daß der dabei erzeugte zinkreiche Auslaugungsrückstand einen erheblich höheren Gehalt an reaktionsfähigem Schwefel aufweist als in der ersten Stufe durch das im Ferrit vorhandene Eisen oxidiert werden kann,
(3) der Arbeitsgang (d) so erfolgt, daß die zink- und eisenreiche Auslaugungslösung mit noch einem weiteren Teil der Konzentrate so behandelt wird, daß ihr Fe³⁺-Gehalt auf unter 5 g/l und vorzugsweise auf 1-3 g/l zurückgeht, wobei diese Reduktionsbehandlung unterlassen werden kann, wenn die zink- und eisenreiche Auslaugungslösung bereits einen Fe³⁺-Gehalt unter 5 g/l aufweist, und daß die Fe³⁺-arme Lösung mit einem weiteren Teil des in Arbeitsgang (a) gebildeten Kalzinats behandelt wird, so daß der Gehalt dieser Lösung an freier H₂SO₄ auf unter 10 g/l und vorzugsweise auf 3-5 g/l zurückgeht, wobei bei dieser Neutralisierungsbehandlung einerseits ein Zinkferritrückstand, der abgetrennt und danach ebenso behandelt wird wie der in Arbeitsgang (b) erzeugte Ferrit, und andererseits eine konditionierte Lösung entsteht,
(4) der Arbeitsgang (e) so erfolgt, daß das Eisen auf an sich bekannte Weise als goethit, Hämatit, Jarosit oder eine andere entsprechend filtrierbare Verbindung ausgefällt wird, was in Abwesenheit von Zinksulfidkonzentrat geschieht, und
(5) die Auslaugung in Arbeitsgang (c)
- entweder den gesamten bei den Arbeitsgängen (b) und (d) entstandenen Ferritrückstand,
- oder nur einen Teil dieses Ferrits betrifft, wobei dann der Rest dieses Ferrits gesondert auf eine an sich als heiße saure Auslaugung bekannte Weise behandelt wird und bei dieser Behandlung eine weitere zink- und eisenreiche Auslaugungslösung entsteht und diese Lösung zusammen mit der in Arbeitsgang (c) gebildeten zink- und eisenreichen Auslaugungslösung den Arbeitsgängen (d), (e) und (f) unterworfen wird.

2. Verfahren nach Anspruch 1, dadurch gekennzeichnet, daß bei Durchführung der Auslaugung in (c) in einer Stufe ein Zinkferritstrom, ein Zinksulfidkonzentratstrom und von der Elektrolyse zurückgeführte Schwefelsäure kontinuierlich in den ersten Behälter einer Serie von kaskadenartig angeordneten Überlaufbehältern eingetragen werden, in jedem dieser Behälter solche Bedingungen aufrechterhalten werden, daß die aus dem letzten Behälter überlaufende Trübe aus zink- und eisenreicher Auslaugungslösung und aus zinkverarmtem Auslaugungsrückstand besteht, und man den letzten Behälter in einen Feststoff-Flüssigkeitsabscheider überlaufen läßt, der den zinkverarmten Auslaugungsrückstand von der zink- und eisenreichen Auslaugungslösung trennt.

3. Verfahren nach Anspruch 1, dadurch gekennzeichnet, daß bei Durchführung der Auslaugung in (c) in zwei Stufen mindestens 30%, vorzugsweise mindestens 40%, des reaktionsfähigen Schwefels in der zweiten Auslaugungsstufe oxidiert wird.

4. Verfahren nach Anspruch 3, dadurch gekennzeichnet, daß die erste Auslaugungsstufe so durchgeführt wird, daß die Fe³⁺-Konzentration der Lösung in der Endphase dieser Stufe einen Wert von 2-10 g/l, vorzugsweise von 3-7 g/l erreicht.

5. Verfahren nach Anspruch 4, dadurch gekennzeichnet, daß darauf geachtet wird, daß diese Konzentration in der Anfangsphase dieser Stufe mindestens 0,1 g/l, vorzugsweise mindestens 0,2 g/l, beträgt.

6. Verfahren nach einem der Ansprüche 3-5, dadurch gekennzeichnet, daß die in die erste Auslaugungsstufe eingebrachten Mengen an Säure, Ferrit und reaktivem Schwefel so gewählt werden, daß die primäre Auslaugungslösung einen Schwefelsäuregehalt von 40-70 g/l aufweist.

7. Verfahren nach einem der Ansprüche 3-6, dadurch gekennzeichnet, daß die Fe³⁺-Konzentration der Lösung in der zweiten Auslaugungsstufe stets auf einem Niveau von 0,1-2 g/l, vorzugsweise von 0,5-1 g/l gehalten wird.

8. Verfahren nach einem der Ansprüche 3-7, dadurch gekennzeichnet, daß vor Abtrennung der zink- und eisenreichen Auslaugungslösung von dem zinkreichen Auslaugungsrückstand jener andere Teil des Kalzinats zur Trübe hinzugefügt wird, wodurch der Arbeitsgang (d) dem Arbeitsgang (c) einverleibt wird.

9. Verfahren nach Anspruch 8, dadurch gekennzeichnet, daß ein Zinkferritstrom, ein zinkreicher Auslaugungsrückstand und von der Elektrolyse zurückgeführte Schwefelsäure kontinuierlich in den ersten Behälter einer ersten Serie von kaskadenartig angeordneten Überlaufbehältern eingetragen werden, in jedem dieser Behälter solche Bedingungen aufrechterhalten werden, daß die aus dem letzten Behälter überlaufende Trübe aus primärer Auslaugungslösung und aus zinkverarmtem Auslaugungsrückstand besteht, man den letzten Behälter in einen Feststoff-Flüssigkeitsabscheider überlaufen läßt, der den zinkverarmten Auslaugungsrückstand von der primären Auslaugungslösung trennt, diese primäre Auslaugungslösung zusammen mit einem Zinksulfidkonzentratstrom kontinuierlich in den ersten Behälter einer zweiten Serie von kaskadenartig angeordneten Überlaufbehältern eingetragen werden, in jedem Behälter dieser zweiten Serie solche Bedingungen aufrechterhalten werden, daß die aus dem letzten Behälter überlaufende Trübe aus zink- und eisenreicher Auslaugungslösung und aus zinkreichem Auslaugungsrückstand besteht, man den letzten Behälter dieser Serie in einen Neutralisierungsbehälter überlaufen läßt, in dem jener andere Teil des Kalzinats zu der Trübe hinzugefügt wird, man den Neutralisierungsbehälter in einen Feststoff-Flüssigkeitsabscheider überlaufen läßt, der die bereits konditionierte, zink- und eisenreiche Auslaugungslösung von dem zinkreichen Auslaugungsrückstand abtrennt, und dieser Rückstand zum ersten Behälter der ersten Serie zurückgeführt wird.

10. Verfahren nach Anspruch 2 oder 9, dadurch gekennzeichnet, daß, um die vorstehend erwähnten Bedingungen aufrechtzuerhalten, die Behälter mit einem selbstansaugenden Rührer ausgerüstet und an eine Sauerstoffquelle angeschlossen sind, und die Rührerdrehzahl und die Sauerstoffabgabe so geregelt werden, daß das Potential in jedem Behälter auf einem vorgegebenen Niveau gehalten wird.

11. Verfahren zur Auslaugung von Zinkferrit zusammen mit einem zinksulfidhaltigen Sulfidmaterial, gemäß dem die Auslaugung mit einer Schwefelsäurelösung bei 60-95°C drucklos oder unter einem sich vom atmosphärischen Druck um weniger als 20 kPa unterscheidenden Druck durchgeführt wird, um eine mit Zink und mit Eisen beladene Auslaugungslösung sowie einen zink- und eisenverarmten Auslaugungsrückstand zu erzeugen, wobei die Mengen an eingesetztem Sulfidmaterial und Zinkferrit so gewählt werden, daß das Molverhältnis des in dem Ferrit enthaltenen Eisens und des in dem Sulfidmaterial enthaltenen reaktiven Schwefels mindestens etwa 0,2 beträgt, wobei es sich bei dem reaktionsfähigen Schwefel um jenen Schwefel handelt, der als Sulfid vorliegt und durch das Ferrisulfat in elementaren Schwefel umgewandelt werden kann, dadurch gekennzeichnet, daß
(1) man mit einem solchen Verhältnis Sulfidmaterial: Ferrit arbeitet, daß die Menge an in dem Sulfidmaterial vorliegendem reaktivem Schwefel erheblich höher ist als durch das in dem Ferrit vorliegende Eisen oxidiert werden kann,
(2) ein Sulfidmaterialstrom, ein Ferritstrom und ein Säurestrom kontinuierlich in den ersten Behälter einer Reihe von Behältern eingetragen werden, die so gebildete Trübe nacheinander durch die weiteren Behälter der Serie geleitet wird, ein Sauerstoffstrom in diese weiteren Behälter eingeleitet wird, und in jedem Behälter der Serie solche Bedingungen aufrechterhalten werden, daß die aus dem letzten Behälter austretende Trübe aus mit Zink und Eisen beladener, 45-70 g/l Schwefelsäure und 2-10 g/l Fe³⁺ enthaltender Auslaugungslösung sowie aus zink- und eisenverarmtem Auslaugungsrückstand besteht, und
(3) man darauf achtet, daß das Potential der Trübe nicht unter 530 mV (NWE) und vorzugsweise nicht unter 560 mV im ersten Behälter absinkt.

12. Verfahren nach Anspruch 11, dadurch gekennzeichnet, daß man von der Einleitung von Sauerstoff in den ersten Behälter absieht und das Potential im selben auf mindestens 530 mV gehalten wird, indem man darin mit einem ausreichend niedrigen Sulfidmaterial:Ferrit-Verhältnis und/oder bei einer ausreichend niedrigen Temperatur arbeitet.

13. Verfahren nach Anspruch 11, dadurch gekennzeichnet, daß das Potential im ersten Behälter auf mindestens 530 mV gehalten wird, indem ein entsprechender Sauerstoffstrom in diesen eingeleitet wird.

## Claims

1. Process for the extraction of zinc from zinc sulphide concentrates, comprising the following operations:
(a) roasting a portion of the concentrates so as to produce calcine
(b) neutral leaching of calcine produced in the operation (a) with a solution of sulphuric acid returning from electrolysis so as to produce a leachate which is rich in zinc and substantially iron-free, which is separated, and a zinc ferrite residue, which is separated,
(c) leaching of another portion of the concentrates and of at least a portion of the zinc ferrite residue produced in the operation (b) with a solution of sulphuric acid returning from electrolysis at 60-95°C at a pressure equal to or differing by less than 20 kPa from atmospheric pressure and in the presence of finely dispersed oxygen so as to produce a leachate which is rich in zinc and in iron, which is separated, and a leaching residue which is depleted in zinc, which is separated, the quantities of concentrates and of zinc ferrite which are used in this operation (c) being such that the molar ratio of the iron contained in the ferrite and the reactive sulphur contained in the concentrates is at least approximately 0.2, the reactive sulphur being the sulphur which is present in the form of sulphide and which can be converted into elemental sulphur by the ferric sulphate,
(d) conditioning, preparatory to the following operation, of the leachate which is rich in zinc and in iron, produced in the operation (c),
(e) precipitation of the major portion of the iron contained in the solution conditioned in the operation (d) so as to produce a solution which is rich in zinc and depleted in iron and a ferriferous precipitate, which is separated, and
(f) introduction of the solution which is rich in zinc and depleted in iron into the neutral leaching in (b),
this process being characterized in that
(1) only a portion of the calcine produced in the operation (a) is leached in the operation (b),
(2) the leaching in (c) is performed
- either in a single stage, in which case the work is done so that the leachate which is rich in zinc and in iron has a sulphuric acid content of 45-75 g/l, preferably of 55-65 g/l, and an Fe³⁺ content of 1-10 g/l, preferably of 2-5 g/l,
- or in two stages, in which case the work is done so that the leachate which is rich in zinc and in iron has a sulphuric acid content of 10-35 g/l, preferably of 10-25 g/l, and an Fe³⁺ content of 0.1-2 g/l, preferably of 0.5-1 g/l, the first stage comprising treating the zinc ferrite and a leaching residue which is rich in zinc, produced in the second stage, with the solution of sulphuric acid returning from electrolysis in the presence of finely dispersed oxygen so as to produce a primary leachate and the said leaching residue which is depleted in zinc, which are separated, and the second stage comprising treating the concentrates with the said primary leachate in the presence of finely dispersed oxygen so as to produce the said leachate which is rich in zinc and in iron and the said leaching residue which is rich in zinc, which are separated, this second stage being performed in conditions such that less than 60% and preferably less than 50% of the reactive sulphur are oxidized therein and that the leaching residue which is rich in zinc produced therein has a reactive sulphur content which is appreciably higher than that which can be oxidized in the first stage by the iron present in the ferrite,
(3) the operation (d) is performed by treating the leachate which is rich in zinc and in iron with yet another portion of the concentrates so as to return its Fe³⁺ content below 5 g/l and preferably to 1-3 g/l, it being possible for this reducing treatment to be omitted when the leachate which is rich in zinc and in iron already has an Fe³⁺ content of less than 5 g/l, and by treating the solution of low Fe³⁺ content with another portion of the calcine produced in the operation (a), so as to return the free H₂SO₄ content of this solution below 10 g/l and preferably to 3-5 g/l, this neutralization treatment producing, on the one hand, a zinc ferrite residue, which is separated and subsequently treated in the same way as the ferrite produced in the operation (b) and, on the other hand, a conditioned solution,
(4) the operation (e) is performed by precipitating the iron in a manner which is known per se in the form of goethite, haematite, jarosite or other compound which has suitable filterability, this being in the absence of zinc sulphide concentrate, and
(5) the leaching in the operation (c) is carried out on
- either all of the ferrite residue produced in the operations (b) and (d),
- or only a portion of this ferrite, in which case the remainder of this ferrite is treated separately in a manner which is known per se by hot acidic leaching, this treatment producing another leachate which is rich in zinc and in iron, and this solution is subjected to the operations (d), (e) and (f) together with the leachate which is rich in zinc and in iron, produced in the operation (c).

2. Process according to Claim 1, characterized in that, when the leaching in (c) is performed in one stage, a stream of zinc ferrite, a stream of zinc sulphide concentrate and sulphuric acid solution returning from electrolysis are introduced continuously into the first tank of a series of tanks with overflow which are placed in cascade, in each. of these tanks conditions are maintained such that the pulp overflowing from the last tank consists of leachate which is rich in zinc and in iron and of leaching residue which is depleted in zinc and the last tank is caused to overflow into a solid-liquid separator which separates the leaching residue which is depleted in zinc from the leachate which is rich in zinc and in iron.

3. Process according to Claim 1, characterized in that, when the leaching in (c) is performed in two stages, at least 30%, preferably at least 40%, of the reactive sulphur is oxidized in the second stage of leaching.

4. Process according to Claim 3, characterized in that the first stage of leaching is performed so that the Fe³⁺ concentration of the solution reaches a value of 2-10 g/l, preferably of 3-7 g/l, in the final phase of this stage.

5. Process according to Claim 4, characterized in that care is taken that the said concentration should be at least 0.1 g/l, preferably at least 0.2 g/l, in the initial phase of the said stage.

6. Process according to any one of Claims 3-5, characterized in that the quantities of acid, of ferrite and of reactive sulphur which are introduced into the first stage of leaching are such that the primary leachate has a sulphuric acid content of 40-70 g/l.

7. Process according to any one of Claims 3-6, characterized in that the Fe³⁺ concentration of the solution in the second stage of leaching is maintained constantly at a level of 0.1-2 g/l, preferably of 0.5-1 g/l.

8. Process according to any one of Claims 3-7, characterized in that, before separating the leachate which is rich in zinc and in iron from the leaching residue which is rich in zinc, the said other portion of the calcine is added to the pulp, thus incorporating the operation (d) in the operation (c).

9. Process according to Claim 8, characterized in that a stream of zinc ferrite, leaching residue which is rich in zinc and sulphuric acid solution returning from electrolysis are introduced continuously into the first tank of a first series of tanks with overflow which are placed in cascade, in each of these tanks conditions are maintained such that the pulp overflowing from the last tank consists of primary leachate and of leaching residue which is depleted in zinc, the last tank is caused to overflow into a solid-liquid separator which separates the leaching residue which is depleted in zinc from the primary leachate, this primary leachate together with a stream of zinc sulphide concentrate are introduced continuously into the first tank of a second series of tanks with overflow which are placed in cascade, in each tank of this second series conditions are maintained such that the pulp overflowing from the last tank consists of leachate which is rich in zinc and in iron and of leaching residue which is rich in zinc, the last tank of this series is caused to overflow into a neutralization tank in which the said other portion of the calcine is added to the pulp, the neutralization tank is caused to overflow into a solid-liquid separator which separates the leachate which is rich in zinc and iron, which is already conditioned, from the leaching residue which is rich in zinc, and this residue is recycled towards the first tank of the first series.

10. Process according to Claim 2 or 9, characterized in that, in order to maintain the abovementioned conditions, the tanks are equipped with a self-sucking stirrer, are connected to a source of oxygen, and the stirrer speed and the oxygen delivery are regulated so as to keep the potential in each tank at a predetermined level.

11. Process for leaching zinc ferrite together with a sulphide material containing zinc sulphide, according to which the leaching is performed with a solution of sulphuric acid at 60-95°C at a pressure equal to or differing by less than 20 kPa from atmospheric pressure so as to produce a leachate which is laden with zinc and with iron and a leaching residue which is depleted in zinc and in iron, the quantities of sulphide material and of zinc ferrite which are used being such that the molar ratio of the iron contained in the ferrite and the reactive sulpur contained in the sulphide material is at least approximately 0.2, the reactive sulphur being the sulphur which is present in the form of sulphide and which can be converted into elemental sulphur by the ferric sulphate, this process being characterized in that
(1) the work is done with a sulphide material:ferrite ratio such that the quantity of reactive sulphur present in the sulphide material is appreciably higher than that which can be oxidized by the iron present in the ferrite,
(2) a stream of sulphide material, a stream of ferrite and a stream of acid are introduced continuously into the first tank of a series of tanks, the pulp thus formed is passed successively through the other tanks of the series, a stream of oxygen is introduced into these other tanks and in each tank of the series conditions are maintained such that the pulp leaving the last tank consists of leachate laden with zinc and with iron, containing 45-70 g/l of sulphuric acid and 2-10 g/l of Fe³⁺, and of leaching residue which is depleted in zinc and in iron, and
(3) care is taken that the potential of the pulp should not fall below 530 mV (SHE) and preferably not below 560 mV in the first tank.

12. Process according to Claim 11, characterized in that the introduction of oxygen into the first tank is refrained from and that the potential therein is kept at at least 530 mV by working therein with a sulphide material:ferrite ratio which is sufficiently low and/or at a temperature which is sufficiently low.

13. Process according to Claim 11, characterized in that the potential in the first tank is kept at at least 530 mV by introducing an appropriate stream of oxygen into it.
